# EUROPEAN PATENT SPECIFICATION

(11) **EP 3 041 965 B1**
(45) Date of publication and mention of the grant of the patent: **09.10.2019**
(21) Application number: 14840671.3
(22) Date of filing: 29.08.2014
(51) Int. Cl.: B22F 1/00, B22F 1/02, B22F 9/24, H01M 4/90, H01M 4/92, C22C 1/04, C22C 5/04

(54) **A MODIFIED BIMETALLIC NANOPARTICLE AND A PROCESS TO PREPARE THE SAME**
MODIFIZIERTER BIMETALLISCHER NANOPARTIKEL UND VERFAHREN ZUR HERSTELLUNG DAVON
NANOPARTICULE BIMÉTALLIQUE MODIFIÉE ET SA PROCÉDÉ DE PRÉPARATION

(30) Priority: 02.09.2013 IN 2841MU2013
(43) Date of publication of application: 13.07.2016
(73) Proprietor: Tata Chemicals Limited, Mumbai 400001 (IN)
(72) Inventor: MAL, Nawal Kishor, Pune Maharashtra 412108 (IN); GHOSH, Anirban, Pune Maharashtra 412108 (IN); AHIRE, Alkesh, Pune Maharashtra 412108 (IN)
(74) Representative: Noréns Patentbyrå AB
(86) International application number: PCT/IB2014/001651
(87) International publication number: WO 2015/028878

(56) References cited:
- WO-A2-2012/095863
- JP-A- 2008 231 556
- US-A1- 2010 280 296
- US-A1- 2011 220 837
- US-B2- 7 659 224
- HITESH G BAGARIA ET AL: "Understanding Mercapto Ligand Exchange on the Surface of FePt Nanoparticles", LANGMUIR, AMERICAN CHEMICAL SOCIETY, US, vol. 22, no. 18, 29 July 2006 (2006-07-29) , pages 7732-7737, XP002514248, ISSN: 0743-7463, DOI: 10.1021/LA0601399 [retrieved on 2006-07-29]

## Description

### FIELD OF INVENTION

The disclosure generally relates to a fuel cell electro catalyst, comprising a modified bimetallic nanoparticle and a process to prepare the same.

### BACKGROUND

As the global demand for energy has increased, alternative energy generation systems are becoming increasingly important. Similarly, as the focus on air pollution and energy generation emissions has increased, much attention has focused on fuel cells as a clean and portable source of energy. Fuel cell is visualized as an alternative energy source which has the potential of substituting conventional power generation, thereby significantly reducing global warming. Among the different types of fuel cells, Polymer Electrolyte Membrane Fuel Cell (PEMFC) and direct methanol fuel cell (DMFC) are particularly favored for residential, commercial (e.g., transportation) and industrial applications compared to other fuel cells.

Membrane electrode assembly (MEA) is the core operating system of the PEMFC. Typically, MEA consists of (i) a proton conducting electrolyte (membrane), and (ii) two electrodes (anode and cathode catalyst layers). Anode and cathode catalyst layers consist of (i) carbon as electron conductor, (ii) platinum metal as electrocatalyst to convert hydrogen into proton (H⁺), and (iii) perfluorosulfonic acid (Nafion®, a proton-exchange fluorinated membrane) as proton conductor.

Nafion®, being an expensive material, makes the fuel cells expensive. Also, the high cost and scarcity of platinum has limited the use of fuel cells in large-scale applications. Therefore, various attempts have been made to build fuel cells wherein platinum has been replaced completely/ partially with cheaper metals to increase the economic viability of fuel cells. This has resulted in production of electro catalysts based on binary, tertiary and quaternary combinations of platinum with other metals. For example, to improve the catalytic efficiency and reduce the cost, other noble metals such as Pd, Rh, Ir, Ru, Os, Au, etc. and non-noble metals including Sn, W, Cr, Mn, Fe, Co, Ni, Cu have been used to form Pt alloy as catalysts.

Examples of binary alloys as electrocatalysts include Platinum-Chromium (U.S. Patent No. 4,316,944), Platinum- Vanadium (U.S. Patent No. 4,202,934), Platinum-Tantalum (U.S. Patent No. 5,183,713), Platinum-Copper (U.S. Patent No. 4,716,087) and Platinum-Ruthenium (U.S. Patent No. 6,007,934). Ternary alloys as electrocatalysts include Platinum-Ruthenium-Osmium (U.S. Patent 5,856,036), Platinum-Nickel-Cobalt, Platinum-Chromium-Cerium (U.S. Patent No. 5,079,107), Platinum-Iron-Cobalt (U.S. Patent No. 4,794,054), Platinum-Ruthenium-Nickel (U.S. Patent-No. 6,517,965), Platinum-Cobalt-Chromium (U.S. Patent No. 4,447,506). Quaternary alloys as elctrocatalysts include Platinum-Nickel-Cobalt-Manganese, (U.S. Patent No. 5,225,391), Platinum-Iron-Cobalt-Copper (U.S. Patent No. 5,024,905).

The existing technology while reducing the fuel cell costs to an extent by replacing expensive platinum, compromise with the catalytic efficiency of the electrocatalysts. Thus, for the fuel cell to become a viable technology there is still a need to increase the catalytic activity while decreasing the cost of the electrodes. There is also a need to find cheaper alternatives to nafion which do not compromise with the proton conduction properties required in the fuel cells.

The prior art includes JP 2008 231556 relating to magnetic hydrosol having high saturation magnetism and coercive force, and stably dispersed into water or a hydrophilic solvent or their mixed solvent.

Another prior art example is US 2010/280296 which relates to supported nanoparticles that can be used as catalysts, in particular to carry out hydrogeneration processes.

WO 2012/095863 A2 discloses modified platinum nanoparticle having at least one mercapto alkyl acid selected from the group consisting of mercaptopropyl sulfonic acid, mercapto propionic acid and mercapto succinic acid, attached thereon.

### SUMMARY

A fuel cell electrocatalyst, comprising a modified bimetallic nanoparticle supported on a substrate, is disclosed. The said modified bimetallic nanoparticle comprises of a first metal consisting of platinum and a second metal selected from the group consisting of Iridium (Ir), Ruthenium (Ru), Copper (Cu), Cobalt (Co), Titanium (Ti), Zirconium (Zr), Hafnium (Hf), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au) having at least one mercapto alkyl acid attached thereon, wherein the molar ratio of the first metal and the second metal to mercapto alkyl acid is at least 16:1 and wherein the substrate is carbon.

A process of preparing the above fuel cell catalyst in the form of a modified bimetallic nanoparticle supported on a substrate, the substrate being carbon is also disclosed. The said process comprises of forming a first solution comprising of a first metal precursor, at least one mercaptoalkyl acid and water, the first metal being platinum; forming a second solution comprising a second metal precursor, the second metal precursor selected from the group consisting of Iridium (Ir), Ruthenium (Ru), Copper (Cu), Cobalt (Co), Titanium (Ti), Zirconium (Zr), Hafnium (Hf), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au), reacting a resultant solution obtained by combining the first solution and the second solution with a substrate, said substrate being carbon, and a reducing agent under stirring at a temperature in the range of 0- 80 degree Celsius to cause reduction of the first metal precursor and the second metal precursor and obtain the modified bimetallic nanoparticle supported on the substrate, wherein the reducing agent is added in an amount such that the molar ratio of the first metal precursor and the second metal precursor to the reducing agent is in a range of 0.20 to 3.0.

### BRIEF DESCRIPTION OF ACCOMPANYING FIGURE

The accompanying figure illustrates the preferred embodiment of the invention and together with the following detailed description serves to explain the principles of the invention.

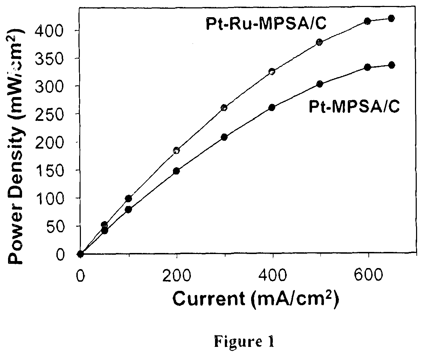

Figure 1 illustrates the power density vs current density observed using electrode catalyst formed using (1) carbon supported platinum nanoparticles modified with mercaptopropyl sulphonic acid (Pt-MPSA/C) and (2) modified bimetallic nanoparticle of the present invention (Pt-Ru-MPSA/C).

### DETAILED DESCRIPTION

To promote an understanding of the principles of the invention, reference will be made to the embodiment and specific language will be used to describe the same. It will nevertheless be understood that no limitation of scope of the invention is thereby intended, such alterations and further modifications in the described product and such further applications of the principles of the inventions as disclosed therein being contemplated as would normally occur to one skilled in art to which the invention relates.

The present disclosure generally relates to a modified bimetallic nanoparticle being used as a electrocatalyst in fuel cells. More particularly, the present disclosure describes a modified bimetallic nanoparticle comprising a first metal consisting of platinum and a second metal selected from the group consisting of Iridium (Ir), Ruthenium(Ru), Copper(Cu), Cobalt (Co), Titanium (Ti), Zirconium (Zr), Hafnium (Hf), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au) having at least one mercapto alkyl acid attached thereon, wherein the molar ratio of the first metal and the second metal to mercapto alkyl acid is at least 16:1.

In accordance with an embodiment, the mercapto alkyl acid is selected from the group consisting of mercatopropyl sulfonic acid, mercapto propionic acid and mercapto succinic acid. In accordance with a related embodiment, the mercapto alkyl acid may be provided on the surface of the modified bimetallic nanoparticle in a random or an arranged manner and is preferably arranged.

In the modified bimetallic nanoparticle, the bimetallic nanoparticle is attached to the mercapto alkyl acid through the mercaptan/thiol (-SH) group of the mercapto alkyl acid. Mercapto alkyl acid plays a dual role, the first being that the anionic component of mercapto alkyl acid provides hydrophilic centres on the modified bimetallic nanoparticle, enabling proton conduction; second, it acts as a stabilizing agent and prevents agglomeration of the modified bimetallic nanoparticle(s) in a solution. Thus, the modified bimetallic nanoparticle disclosed herein also eliminates the use of nafion in the electrode catalyst layer as used in conventional fuel cells.

Molar ratio of the first metal and the second metal to mercapto alkyl acid being at least 16:1 aids in balancing the proton conduction properties obtained due to the presence of mercapto alkyl acid and dissociation of incident hydrogen into proton and electron occurring due to the exposed surface on the modified bimetallic nanoparticle. It is the maximum ratio of first metal and the second metal to mercapto alkyl acid where optimum activity of the electrode catalyst could be observed. The activity tends to decrease at ratio greater than 16:1 i.e. 8:1 or 4:1. For example, power density for 8:1 and 16:1 ratio was observed as 220 and 415 mW/cm2, respectively.

The modified bimetallic nanoparticle described above is used as an electrocatalyst in a fuel cell as a supported catalyst, the substrate being Carbon. The carbon substrate may be selected from graphite, carbon black, activated carbon, carbon nanotubes, carbon paper, carbon fiber and carbon fabric.

The carbon supported modified bimetallic nanoparticle provides carbon for transporting electrons from the current collector through the gas diffusion layer to the electrode catalyst layer; bimetallic nanoparticle for breakdown of hydrogen to proton; anionic component of the mercapto alkyl acid for transportation of protons from the membrane to the electrode catalyst layer.

In accordance with an embodiment, the first metal and the second metal are in a molar ratio in the range of 99:1 and 1:99 and preferably 4:1 to 1:1 and more preferably have a molar ration of 3:1.

In accordance with an embodiment, the first metal and the mercapto alkyl acid are in a molar ratio of atleast 12:1. In accordance with a further embodiment, the second metal and the mercapto alkyl acid are in a molar ratio of atleast 4:1.

In accordance with an embodiment, the modified bimetallic nanoparticle(s) may have random, cluster-in-cluster, core shell and alloy structures and preferably has alloy structure.

In accordance with an embodiment, the shape of the modified bimetallic nanoparticle maybe spherical, tetrahedral, cubic, irregular-prismatic, icosahedral, cubo-hedral and is preferably spherical.

In accordance with an embodiment, the particle size of the said modified bimetallic nanoparticle may range from 1-100 nanometers and is preferably in the range of 1-10 nanometers.

The modified bimetallic nanoparticle of the present invention while providing a cheaper electrocatalyst also enhances the electrocatalytic activity when incorporated in the electrode catalyst layer. Experiments were conducted to determine the effect of the second metal on the electrocatalytic activity of the modified bimetallic nanoparticle of the present invention in the electrode catalyst layer. Figure 1 illustrates the power density vs current density observed using electrode catalyst formed using (1) carbon supported platinum nanoparticles modified with mercaptopropyl sulphonic acid (Pt-MPSA/C) and (2) modified bimetallic nanoparticle of the present invention (Pt-Ru-MPSA/C). Higher power density for a given current density was observed when using modified bimetallic nanoparticle of the present invention clearly evidencing improvement in electrocatalytic activity.

The present disclosure also relates to an electrode for a fuel cell comprising a gas diffusion layer having an electrode catalyst layer coated thereon, wherein the electrode catalyst layer comprises of a carbon supported modified bimetallic nanoparticle, as described above.

In accordance with an aspect, the electrode catalyst layer further comprises of a binder to facilitate the immobilization of the carbon supported modified bimetallic nanoparticle on the gas diffusion layer. The binder is an organic polymer including but not limited to polytetrafluoroethylene (PTFE), polyvinylidenefluoride-hexafluoropropene (PVDF-HFP), polyvinyl fluoride (PVF), polyvinylidenefluoride (PVDF), polychlorotrifluoroethylene (PCTEF), tetrafluoroethylene thylene (ETFE) and nafion.

In accordance with an embodiment, platinum comprises 0.05 -5 milligrams/cm2 of the electrode catalyst layer. In accordance with a related embodiment, the metal selected from the group consisting of Iridium (Ir), Ruthenium (Ru), Copper (Cu), Cobalt (Co), Titanium (Ti), Zirconium (Zr), Hafnium (Hf), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au) comprises 0.0125 - 1.25 milligrams/cm² of the electrode catalyst layer.

In accordance with an aspect, the gas diffusion layer is made of a conductive porous substrate including but not limited to carbon cloth, carbon paper, carbon felt or Teflon sheet.

In accordance with an aspect, the above-described modified bimetallic nanoparticle(s) may be used as electrocatalyst in various types of fuel cells including but not limited to Polymer Electrolyte Membrane Fuel Cell (PEMFC), Direct methanol Fuel Cell (DMFC), Solid Oxide Fuel Cell (SOFC) etc.

The present disclosure further relates to a membrane electrode assembly for a fuel cell. The said membrane electrode assembly comprises of a pair of electrodes sandwiching an electrolyte membrane. Each electrode comprises of a gas diffusion layer having an electrode catalyst layer, as disclosed above, coated thereon.

In accordance with an aspect, the electrode catalyst layer of the electrode is in direct contact with the electrolyte membrane.

The present disclosure also describes a process of preparing the above-described fuel cell catalyst in the form of a modified bimetallic nanoparticle. The said process of preparing a modified bimetallic nanoparticle comprises of forming a first solution comprising of a first metal precursor, at least one mercaptoalkyl acid and water, the first metal being platinum; forming a second solution comprising a second metal precursor, the second metal precursor selected from the group consisting of Iridium (Ir), Ruthenium (Ru), Copper (Cu), Cobalt (Co), Titanium (Ti), Zirconium (Zr), Hafnium (Hi), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au), reacting a resultant solution obtained by combining the first solution and second solution with a reducing agent under stirring at a temperature in the range of 0 - 80 degree Celsius to cause reduction of the first metal precursor and the second metal precursor and obtain the modified bimetallic nanoparticle, wherein the reducing agent is added in an amount such that the molar ratio of the first metal precursor and the second metal precursor to the reducing agent is in a range of 0.20 to 3.0.

In accordance with the invention, the above-described modified bimetallic nanoparticle supported on a substrate is prepared by adding a substrate to a resultant solution obtained by combining the first solution and the second solution. The substrate is Carbon and may be selected from graphite, carbon black, activated carbon, carbon nanotubes, carbon paper, carbon fiber and carbon fabric.

In accordance with an aspect, partial reduction of one or both the first metal precursor and second metal precursor is carried out before complete reduction into nanoparticles. In accordance with an embodiment, partial reduction may be achieved by non-stoichiometric addition of reducing agent to the first solution and second solution.

In accordance with an embodiment, partial reduction of first metal precursor is carried out before addition of second solution. Reducing agent is then added to the resultant solution comprising partially reduced first metal precursor, to cause the complete reduction of first metal precursor and second metal precursor. In accordance with an alternate embodiment, partial reduction of both the first metal precursor and second metal precursor are carried out simultaneously by addition of non-stoichiometric amount of reducing agent followed by further addition of reducing agent to cause complete reduction. When a modified bimetallic nanoparticle supported on a substrate is prepared, further addition of reducing agent to cause complete reduction of first metal precursor and second metal precursor is carried out after the addition of the substrate to the resultant solution.

In accordance with an aspect, the process is carried out under stirring at a temperature in the range of 0-80 degree Celsius and is preferably carried out at 0 degree Celsius.

In accordance with an embodiment, the reducing agent is added in an amount such that the molar ratio of platinum precursor and the metal precursor to the reducing agent is in a range of 0.20 to 3.0 and is preferably 1.5.

In accordance with an embodiment, water is added in an amount such that the molar ratio of the first metal precursor and the second metal precursor to water is in a range of 2000:1 to 20000:1 and is preferably 5000.

In accordance with an embodiment, the molar concentration of mercapto alkyl acid is at least 0.001mM and is preferably 0.008.

In accordance with an embodiment, the platinum precursor may be any salt of platinum including but not limited to PtCl₂, PtCl₄, K₂PtCl₆ and K₂PtCl₆. In accordance with a related embodiment, the molar concentration of the platinum precursor is in the range of .001mM and 2M and is preferably 1M.

In accordance with an embodiment, the second metal precursor may be any salt of the second metal, capable of being reduced by a reducing agent to form the metal nanoparticle. In accordance with a related embodiment, the molar concentration of the second metal is in the range of 2-4 M and is preferably 3 M.

In accordance with an embodiment, any known reducing agent may be used in the method described above, and is preferably selected from the group comprising of NaBH4, HCHO/NaOH and HCHO.

In accordance with an aspect, the present process results in obtaining narrow particle size distribution of above disclosed modified bimetallic nanoparticle. Process conditions such as concentration of first metal precursor and second metal precursor in water, concentration of mercapto alkyl acid, molar ratio of first metal precursor and second metal precursor to the reducing agent play a crucial role in deciding the particle sizes and narrow particle size distributions.

The present disclosure further provides a method for preparing the above disclosed electrode for a fuel cell. The said process comprises of mixing the carbon supported modified bimetallic nanoparticle(s) with an alcohol. The mixture thus obtained is coated on the gas diffusion layer followed by drying at a temperature that facilitates coating of the carbon supported catalyst on the gas diffusion layer.

The alcohol may be selected from the group comprising of methanol, ethanol, propanol, butanol, isobutanol and is preferably isopropanol.

A binder may be added to the solution to further facilitate the immobilization of the carbon supported catalyst on the gas diffusion layer. The binder may be any organic polymer including but not limited to polytetrafluoroethylene (PTFE), polyvinylidenefluoridehexafluoropropene (PVDF-HFP), polyvinyl fluoride (PVF), polyvinylidenefluoride (PVDF), polychlorotrifluoroethylene (PCTEF), tetrafluoroethylene thylene (ETFE) and nafion.

### Examples

The following examples are provided to explain and illustrate preferred embodiments of the process of the present invention:

### Preparation of Carbon Supported Modified Bimetallic Nanoparticle

### Example 1: Pt:Ru = 2.999:1. (Pt+Ru)/(C+Pt+Ru) = 27.61 wt%, (Pt+Ru):MPSA = 177.86:1, (Pt+Ru)/NaBH₄ = 0.6670; H₂O/(Pt+Ru) = 16241.

In a 100 mL conical flask, 1 mL of 0.1 M K₂PtCl₆ solution, 0.167 mL of 0.2 M RuCl₃ solution, and 0.15 mL of 5 mM MPSA solution were taken, and 39 mL of H₂O was added to it. The solution was cooled to 0 °C. 1 mL of a 0.1 M NaBH₄ solution was added to the resulting solution dropwise under stirring at ice cold conditions within 10 seconds. To the reaction mixture, 60 mg of Vulcan carbon was added, and was stirred at 0 °C for until complete dispersion of the carbon. 1 mL of NaBH₄ solution was further added to the reaction mixture dropwise within 10 seconds. The stirring was continued for 30 minutes under ice cold conditions. It was then filtered, washed with copious amounts of water and dried under vacuum at room temperature.

The terminal -SO₃H groups were protonated by addition of 10 mL of 1M H₂SO₄ solution to the dried sample and stirring at room temperature for 4 hours. The protonated samples were again filtered, washed with copious amounts of water and dried under vacuum.

Final yield of the sample is 100 mg. Particle size analysis shows mean diameter = 0.9 nm, size range = 0.7-1.2 nm.

### Example 2: Pt:Ru = 2.999:1, (Pt+Ru)/(C+Pt+Ru) = 27.61 wt%, (Pt+Ru):MPSA = 355.73:1, (Pt+Ru)/NaBH₄ _= 0.6670; H₂O/(Pt+Ru) = 16241.

In a 100 mL conical flask, 1 mL of 0.1 M K₂PtCl₆ solution, and 0.075 mL of 5 mM MPSA solution were taken, and 39 mL of H₂O was added to it. The solution was cooled to 0 °C. 1 mL of a 0.1 M NaBH₄ solution was added to the resulting solution dropwise under stirring at ice cold conditions within 10 seconds. To the reaction mixture, 60 mg of Vulcan carbon was added, and was stirred at 0 °C for until complete dispersion of the carbon. Thereafter, 0.167 mL of 0.2 M RuCl₃ solution was added to it. 1 mL of NaBH₄ solution was further added to the reaction mixture dropwise within 10 seconds. The stirring was continued for 30 minutes under ice cold conditions. Then it was filtered, washed with copious amounts of water and dried under vacuum at room temperature.

The terminal -SO₃H groups were protonated by addition of 10 mL of 1M H₂SO₄ solution to the dried sample and stirring at room temperature for 4 hours. The protonated samples were again filtered, washed with copious amounts of water and dried under vacuum.

Final yield of the sample is 100 mg. Particle size analysis shows mean diameter = 2.9 nm, size range = 1.7-4.2 nm.

### Example 3: Pt:Ru = 3.025:1, (Pt+Ru)/(C+Pt+Ru) = 46.994 wt%, (Pt+Ru):MPSA = 178.88:1, (Pt+Ru)/NaBH₄ = 1.34155; H₂O/(Pt+Ru) = 16564.

In a 2 L beaker, 1 g of K₂PtCl₆, and 3 mL of 5 mM MPSA solution were taken, and 800 mL of H₂O was added to it. The solution was cooled to 0 °C. 10 mL of a 0.1 M NaBH₄ solution was added to the resulting solution dropwise under stirring at ice cold conditions within 30 sec. To the reaction mixture, 600 mg of Vulcan carbon was added, and was stirred at 0 °C for until complete dispersion of the carbon. Thereafter, 3.333 mL of 0.2 M RuCl₃ solution was added to it. 10 mL of 0.1 M NaBH₄ solution was further added to the reaction mixture dropwise within 30 seconds. The stirring was continued for 30 min under ice cold conditions. Then it was filtered, washed with copious amounts of water and dried under vacuum at room temperature.

The terminal -SO₃H groups were protonated by addition of 100 mL of 1M H₂SO₄ solution to the dried sample and stirring at room temperature for 12 hours. The protonated samples were again filtered, washed with copious amounts of water and dried under vacuum.

Final yield of the sample is 1 g. Particle size analysis shows mean diameter = 0.7 nm, size range = 0.5-0.9 nm.

### Example 4: Pt:Ru = 3.025:1, (Pt+Ru)/(C+Pt+Ru) = 46.994 wt%, (Pt+Ru):MPSA = 346.213:1, (Pt+Ru)/NaBH₄ = 1.34155; H₂O/(Pt+Ru) = 16564.

In a 2 L beaker, 1 g of K₂PtCl₆, and 1.5 mL of 5 mM MPSA solution were taken, and 800 mL of H₂O was added to it. The solution was cooled to 0 °C.5 mL of a 0.1 M NaBH₄ solution was added to the metal salt solution dropwise under stirring at ice cold conditions within 15 seconds. To the reaction mixture, 600 mg of Vulcan carbon was added, and was stirred at 0 °C for until complete dispersion of the carbon. Thereafter, 3.333 mL of RuCl₃ solution was added to it. 1 5 mL of NaBH₄ solution was further added to the reaction mixture dropwise within 45 seconds. The stirring was continued for 30 minutes under ice cold conditions. Then it was filtered, washed with copious amounts of water and dried under vacuum at room temperature.

The terminal -SO₃H groups were protonated by addition of 100 mL of 1M H₂SO₄ solution to the dried sample and stirring at room temperature for 12 hours. The protonated samples were again filtered, washed with copious amounts of water and dried under vacuum.

Final yield of the sample is 1 g. Particle size analysis shows mean diameter = 3.1 nm, size range = 2.3-4.2 nm.

### Example 5: Pt:Ir = 3.00:1, (Pt+Ir)/(C+Pt+Ir) = 30.159 wt%, (Pt+Ir):MPSA = 177.733:1, (Pt+Ir)/NaBH₄ = 0.6665; H₂O/(Pt+Ir) = 16254.

In a 100 mL conical flask, 1 mL of 0.1 M K₂PtCl₆ solution, 0.333 mL of 0.1 M H₂IrCl₆ solution, and 0.15 mL of 5 mM MPSA solution were taken, and 39 mL of H₂O was added to it. The solution was cooled to 0 °C.1 mL of a 0.1 M NaBH₄ solution was added to the metal salt solution dropwise under stirring at ice cold conditions within 10 seconds. To the reaction mixture, 60 mg of Vulcan carbon was added, and was stirred at 0 °C for until complete dispersion of the carbon. 1 mL of NaBH₄ solution was further added to the reaction mixture dropwise within 10 seconds. The stirring was continued for 30 min under ice cold conditions. Then it was filtered, washed with copious amounts of water and dried under vacuum at room temperature.

The terminal -SO₃H groups were protonated by addition of 10 mL of 1M H₂SO₄ solution to the dried sample and stirring at room temperature for 4 hours. The protonated samples were again filtered, washed with copious amounts of water and dried under vacuum.

Final yield of the sample is 100 mg. Particle size analysis shows mean diameter = 1.2 nm, size range = 0.7-1.8 nm.

### Example 6: Pt:Ir = 3.00:1, (Pt+Ir)/(C+Pt+Ir) = 30.159 wt%, (Pt+Ir):MPSA = 355.46:1, (Pt+Ir)/NaBH₄ = 0.6665; H₂O/(Pt+Ir) = 16254.

In a 100 mL conical flask, 1 mL of 0.1 M K₂PtCl₆ solution, and 0.075 mL of 5 mM MPSA solution were taken, and 39 mL of H₂O was added to it. The solution was cooled to 0 °C.1 mL of a 0.1 M NaBH₄ solution was added to the metal salt solution dropwise under stirring at ice cold conditions within 10 seconds. To the reaction mixture, 60 mg of Vulcan carbon was added, and was stirred at 0 °C for until complete dispersion of the carbon. Thereafter, 0.333 mL of 0.1 M H₂IrCl₆ solution was added to it.1 mL of NaBH₄ solution was further added to the reaction mixture dropwise within 10 seconds. The stirring was continued for 30 min under ice cold conditions. Then it was filtered, washed with copious amounts of water and dried under vacuum at room temperature.

The terminal -SO₃H groups were protonated by addition of 10 mL of 1M H₂SO₄ solution to the dried sample and stirring at room temperature for 4 hours. The protonated samples were again filtered, washed with copious amounts of water and dried under vacuum.

Final yield of the sample is 100 mg. Particle size analysis shows mean diameter = 3.6 nm, size range = 2.4-4.7 nm.

### Example 7: Pt:Ir = 3.023:1, (Pt+Ir)/(C+Pt+Ir) = 46.50 wt%, (Pt+Ir):MPSA = 178.89:1, (Pt+Ir)/NaBH₄ = 1.3417; H₂O/(Pt+Ir) = 16562.

In a 2 L conical flask, 1 g of K₂PtCl₆ and 3 mL of 5 mM MPSA solution were taken, and 800 mL of H₂O was added to it. The solution was cooled to 0 °C.10 mL of a 0.1 M NaBH₄ solution was added to the metal salt solution dropwise under stirring at ice cold conditions within 30 seconds. To the reaction mixture, 600 mg of Vulcan carbon was added, and was stirred at 0 °C for until complete dispersion of the carbon. Thereafter, 6.67 mL of 0.1 M H₂IrCl₆ solution was added to the reaction mixture. 10 mL of NaBH₄ solution was further added to the reaction mixture dropwise within 30 sec.The stirring was continued for 30 min under ice cold conditions. Then it was filtered, washed with copious amounts of water and dried under vacuum at room temperature.

The terminal -SO₃H groups were protonated by addition of 100 mL of 1M H₂SO₄ solution to the dried sample and stirring at room temperature for 4 hours. The protonated samples were again filtered, washed with copious amounts of water and dried under vacuum.

Final yield of the sample is 1 g. Particle size analysis shows mean diameter = 1.7 nm, size range = 1.1-3.2 nm.

### Example 8: Pt:Ir = 3.023:1, (Pt+Ir)/(C+Pt+Ir) = 46.50 wt%, (Pt+Ir):MPSA = 357.79:1, (Pt+Ir)/NaBH₄ = 1.3417; H₂O/(Pt+Ir) = 16562.

In a 2 L conical flask, 1 g of K₂PtCl₆ and 1.5 mL of 5 mM MPSA solution were taken, and 800 mL of H₂O was added to it. The solution was cooled to 0 °C. 5 mL of a 0.1 M NaBH₄ solution was added to the metal salt solution dropwise under stirring at ice cold conditions within 30 sec. To the reaction mixture, 600 mg of Vulcan carbon was added, and was stirred at 0 °C for until complete dispersion of the carbon. Thereafter, 6.67 mL of 0.1 M H₂IrCl₆ solution was added to the reaction mixture. 15 mL of NaBH₄ solution was further added to the reaction mixture dropwise within 30 sec. The stirring was continued for 30 min under ice cold conditions. Then it was filtered, washed with copious amounts of water and dried under vacuum at room temperature.

The terminal -SO₃H groups were protonated by addition of 100 mL of 1M H₂SO₄ solution to the dried sample and stirring at room temperature for 4 hours. The protonated samples were again filtered, washed with copious amounts of water and dried under vacuum.

Final yield of the sample is 1 g. Particle size analysis shows mean diameter = 2.6 nm, size range = 2.0-4.2 nm.

### Example 9: Pt:Ru = 3.025:1, (Pt+Ru)/(C+Pt+Ru) = 46.994 wt%, (Pt+Ru):MPSA = 178.88:1, (Pt+Ru)/NaBH₄ = 1.167: H₂O/(Pt+Ru) = 16564.

In a 2 L beaker, 1 g of K₂PtCl₆, and 3 mL of 5 mM MPSA solution were taken, and 800 mL of H₂O was added to it. The solution was cooled to 0 °C. 13 mL of a 0.1 M NaBH₄ solution was added to the metal salt solution dropwise under stirring at ice cold conditions within 30 sec. To the reaction mixture, 600 mg of Vulcan carbon was added, and was stirred at 0 °C for until complete dispersion of the carbon. Thereafter, 3.333 mL of 0.2 M RuCl₃ solution was added to it.10 mL of 0.1 M NaBH₄ solution was further added to the reaction mixture dropwise within 30 sec. The stirring was continued for 30 min under ice cold conditions. Then it was filtered, washed with copious amounts of water and dried under vacuum at room temperature.

The terminal -SO₃H groups were protonated by addition of 100 mL of 1M H₂SO₄ solution to the dried sample and stirring at room temperature for 12 h. The protonated samples were again filtered, washed with copious amounts of water and dried under vacuum.

Final yield of the sample is 1 g. Particle size analysis shows mean diameter = 1.3 nm, size range = 0.9-2.2 nm.

### Example 10: Pt:Ir = 3.023:1, (Pt+Ir)/(C+Pt+Ir) = 46.50 wt%, (Pt+Ir):MPSA = 178.89:1, (Pt+Ir)/NaBH₄ = 1.167; H₂O/(Pt+Ir) = 16562.

In a 2 L conical flask, 1 g of K₂PtCl₆ and 3 mL of 5 mM MPSA solution were taken, and 800 mL of H₂O was added to it. The solution was cooled to 0 °C. 13 mL of a 0.1 M NaBH₄ solution was added to the metal salt solution dropwise under stirring at ice cold conditions within 30 sec. To the reaction mixture, 600 mg of Vulcan carbon was added, and was stirred at 0 °C for until complete dispersion of the carbon. Thereafter, 6.67 mL of 0.1 M H₂IrCl₆ solution was added to the reaction mixture. 10 mL of NaBH₄ solution was further added to the reaction mixture dropwise within 30 sec. The stirring was continued for 30 min under ice cold conditions. Then it was filtered, washed with copious amounts of water and dried under vacuum at room temperature.

The terminal -SO₃H groups were protonated by addition of 100 mL of 1M H₂SO₄ solution to the dried sample and stirring at room temperature for 4 hours. The protonated samples were again filtered, washed with copious amounts of water and dried under vacuum.

Final yield of the sample is 1 g. Particle size analysis shows mean diameter = 2.2 nm, size range = 1.3-3.6 nm.

The following examples illustrate the preparation of gas diffusion layer in accordance with the present invention.

### Example 11:

22 mg of Pt-Ru-MPSA/C, 267 µL H₂O and 333 µL 2-propanol were mixed for 15 min at 28 °C. It was coated on gas diffusion layer, which comprises of porous carbon paper. It was dried at room temperature for overnight. It was used as an anode catalyst in hydrogen fuel cell. The power density observed was 450 mW/cm².

### Example 12:

22 mg of Pt-Ru-MPSA/C, 267 µL H₂O and 333 µl 2-propanol were mixed. 4.4 mg of polyvinylidenefluoride-hexafluoropropene (PVDF-HFP) dissolved in 5 mg of dimethyl formamide (DMF) was then added under stirring for 15 min. It was coated on 25 cm² gas diffusion layer. It was dried at room temperature for overnight. It was used as an anode and cathode catalyst in hydrogen fuel cell. Another batch was prepared with same composition and coated on 10 cm² gas diffusion layer followed by drying at ambient temperature. The power density observed was 326 mW/cm².

### Example 13:

22 mg of Pt-Ru-MPSA/C, 150 µL H₂O and 150 µL 2-propanol were mixed. 7.33 mg of polytetrafluoroethylene (PTFE, 60% aq.) was then mixed for 15 min. It was coated on 25 cm² gas diffusion layer. It was dried at room temperature for overnight. It was used as an anode and cathode catalyst in hydrogen fuel cell. Another batch was prepared with same composition and coated on 10 cm² gas diffusion layer followed by drying at ambient temperature. The power density observed was 264 mW/cm².

### INDUSTRIAL APPLICABILITY

The modified bimetallic nanoparticle described above is cost effective and highly efficient. It finds its uses as catalyst in various types of industrial applications including applications as electrode catalyst in fuel cells, in solid state electronic devices etc. The said modified bimetallic nanoparticle(s) exhibits improved proton conduction properties as well as electrocatalytic activity. The method to prepare the said modified bimetallic nanoparticle described above is easy to perform and inexpensive.

## Claims

1. A fuel cell electrocatalyst, comprising a modified bimetallic nanoparticle supported on a substrate, wherein the modified bimetallic nanoparticle comprises a first metal consisting of platinum and a second metal selected from the group consisting of Iridium (Ir), Ruthenium(Ru), Copper(Cu), Cobalt (Co), Titanium (Ti), Zirconium (Zr), Hafnium (Hf), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au) having at least one mercapto alkyl acid attached thereon,
wherein the molar ratio of the first metal and the second metal to mercapto alkyl acid is at least 16:1, and
wherein the substrate is Carbon.

2. A fuel cell electrocatalyst as claimed in claim 1 wherein the first metal and the second metal are in a molar ratio in the range of 4:1 to 1:1.

3. A fuel cell electrocatalyst as claimed in claim 1 wherein the first metal and the mercaptoalkyl acid are in a molar ratio of at least 12:1.

4. A fuel cell electrocatalyst as claimed in claim 1 wherein the second metal and the mercaptoalkyl acid are in a molar ratio of at least 4:1.

5. A fuel cell electrocatalyst as claimed in claim 1 wherein the mercapto alkyl acid is selected from the group consisting of mercatopropyl sulfonic acid, mercapto propionic acid and mercapto succinic acid.

6. A fuel cell electrocatalyst as claimed in claim 1 wherein the modified bimetallic nanoparticle has a particle size in the range of 1-10 nm.

7. A process of preparing a fuel cell electrocatalyst in the form of a modified bimetallic nanoparticle supported on a substrate, the process comprising:
forming a first solution comprising of a first metal precursor, at least one mercaptoalkyl acid and water, the first metal being platinum;
forming a second solution comprising a second metal precursor, the second metal precursor selected from the group consisting of Iridium (Ir), Ruthenium(Ru), Copper(Cu), Cobalt (Co), Titanium (Ti), Zirconium (Zr), Hafnium (Hf), Vanadium (V), Niobium (Nb), Tantalum (Ta), Chromium (Cr), Molybdenum (Mo), Tungsten (W), Iron (Fe), Osmium (Os), Nickel (Ni), Palladium (Pd), Rhodium (Rh), Silver (Ag) and Gold (Au),
reacting a resultant solution obtained by combining the first solution and the second solution with a substrate, said substrate being carbon, and a reducing agent under stirring at a temperature in the range of 0- 80 degree Celsius to cause reduction of the first metal precursor and the second metal precursor and obtain the modified bimetallic nanoparticle supported on the substrate, wherein the reducing agent is added in an amount such that the molar ratio of the first metal precursor and the second metal precursor to the reducing agent is in a range of 0.20 to 3.0.

8. A process of preparing a fuel cell electrocatalyst as claimed in claim 7, wherein the water is added in an amount such that the molar ratio of the first metal precursor and the second metal precursor to the water is in a range of 2000 to 20000.

9. A process of preparing a fuel cell electrocatalyst as claimed in claim 7, wherein the reducing agent is selected from the group consisting of NaBH4, HCHO/NaOH and HCHO.

## Patentansprüche

1. Brennstoffzellen-Elektrokatalysator, umfassend ein modifiziertes bimetallisches Nanoteilchen, das auf einem Substrat aufgebracht ist,
wobei das modifizierte bimetallische Nanoteilchen ein erstes Metall und ein zweites Metall umfasst,
wobei das erste Metall aus Platin besteht und das zweite Metall aus der Gruppe bestehend aus Iridium (Ir), Ruthenium (Ru), Kupfer (Cu), Kobalt (Co), Titan (Ti), Zirconium (Zr), Hafnium (Hf), Vanadium (V), Niob (Nb), Tantal (Ta), Chrom (Cr), Molybdän (Mo), Wolfram (W), Eisen (Fe), Osmium (Os), Nickel (Ni), Palladium (Pd), Rhodium (Rh), Silber (Ag) und Gold (Au), ausgewählt ist und daran zumindest eine Mercaptoalkylsäure gebunden ist,
wobei das molare Verhältnis zwischen dem ersten Metall und dem zweiten Metall zu Mercaptoalkylsäure mindestens 16:1 beträgt, und
wobei das Substrat Kohlenstoff ist.

2. Brennstoffzellen-Elektrokatalysator wie in Anspruch 1 beansprucht, wobei das erste Metall und das zweite Metall in einem molaren Verhältnis im Bereich von 4:1 zu 1:1 stehen.

3. Brennstoffzellen-Elektrokatalysator wie in Anspruch 1 beansprucht, wobei das erste Metall und die Mercaptoalkylsäure in einem molaren Verhältnis von mindestens 12:1 stehen.

4. Brennstoffzellen-Elektrokatalysator wie in Anspruch 1 beansprucht, wobei das zweite Metall und die Mercaptoalkylsäure in einem molaren Verhältnis von mindestens 4:1 stehen.

5. Brennstoffzellen-Elektrokatalysator wie in Anspruch 1 beansprucht, wobei die Mercaptoalkylsäure ausgewählt ist aus der Gruppe bestehend aus Mercaptopropyl-Schwefelsäure, Mercapto-Propionsäure und Mercapto-Bernsteinsäure.

6. Brennstoffzellen-Elektrokatalysator wie in Anspruch 1 beansprucht, wobei das modifizierte bimetallische Nanoteilchen eine Teilchengröße im Bereich von 1-10 nm hat.

7. Verfahren zum Präparieren eines Brennstoffzellen-Elektrokatalysators in der Form eines auf einem Substrat aufgebrachten modifizierten bimetallischem Nanoteilchens, wobei das Verfahren umfasst:
Herstellen einer ersten Lösung, die einen Präkursor eines ersten Metalls, mindestens eine Mercaptoalkylsäure und Wasser umfasst, wobei das erste Metall Platin ist;
Herstellen einer zweiten Lösung, die einen Präkursor eines zweiten Metalls umfasst, wobei der Präkursor des zweiten Metalls aus der Gruppe bestehend aus Iridium (Ir), Ruthenium (Ru), Kupfer (Cu), Kobalt (Co), Titan (Ti), Zirconium (Zr), Hafnium (Hf), Vanadium (V), Niob (Nb), Tantal (Ta), Chrom (Cr), Molybdän (Mo), Wolfram (W), Eisen (Fe), Osmium (Os), Nickel (Ni), Palladium (Pd), Rhodium (Rh), Silber (Ag) und Gold (Au) ausgewählt ist;
Durchführen einer Reaktion einer Mischlösung, die durch Kombinieren der ersten Lösung und der zweiten Lösung erhalten wird, mit einem Substrat und einem Reduktionsmittel, wobei das Substrat Kohlenstoff ist und wobei die Reaktion unter Rühren bei einer Temperatur im Bereich von o-8o°C durchgeführt wird, um eine Reduktion des Präkursors des ersten Metalls und des Präkursors des zweiten Metalls zu bewirken und um das auf dem Substrat aufgebrachte modifizierte bimetallische Nanoteilchen zu erhalten, wobei das Reduktionsmittel in einer Menge hinzugefügt wird, so dass das molare Verhältnis des Präkursors des ersten Metalls und des Präkursors des zweiten Metalls zu dem Reduktionsmittel in einem Bereich von 0,2 bis 3,0 liegt.

8. Verfahren zum Präparieren eines Brennstoffzellen-Elektrokatalysators wie in Anspruch 7 beansprucht, wobei das Wasser in einer Menge hinzugefügt wird, so dass das molare Verhältnis des Präkursors des ersten Metalls und des Präkursors des zweiten Metalls zu dem Wasser in einem Bereich von 2000 bis 20000 liegt.

9. Verfahren zum Präparieren eines Brennstoffzellen-Elektrokatalysators wie in Anspruch 7 beansprucht, wobei das Reduktionsmittel ausgewählt ist aus der Gruppe bestehend aus NaBH₄, HCHO/NaOH und HCHO.

## Revendications

1. Catalyseur électrolytique pour pile à combustible, comprenant une nanoparticule bimétallique modifiée supportée sur un substrat, dans lequel la nanoparticule bimétallique modifiée comprend un premier métal consistant en du platine et un deuxième métal choisi dans le groupe constitué par l'iridium (Ir), le ruthénium (Ru), le cuivre (Cu), le cobalt (Co), le titane (Ti), le zirconium (Zr), le hafnium (Hf), le vanadium (V), le niobium (Nb), le tantale (Ta), le chrome (Cr), le molybdène (Mo), le tungstène (W), le fer (Fe), l'osmium (Os), le nickel (Ni), le palladium (Pd), le rhodium (Rh), l'argent (Ag) et l'or (Au) ayant au moins un acide mercaptoalkylique rattaché sur celui-ci,
dans lequel le rapport molaire du premier métal et du deuxième métal à l'acide mercaptoalkylique est d'au moins 16/1, et
dans lequel le substrat est du carbone.

2. Catalyseur électrolytique pour pile à combustible selon la revendication 1, dans lequel le premier métal et le deuxième métal sont présents en un rapport molaire situé dans la plage allant de 4/1 à 1/1.

3. Catalyseur électrolytique pour pile à combustible selon la revendication 1, dans lequel le premier métal et l'acide mercaptoalkylique sont présents en un rapport molaire d'au moins 12/1.

4. Catalyseur électrolytique pour pile à combustible selon la revendication 1, dans lequel le deuxième métal est l'acide mercaptoalkylique sont présents en un rapport molaire d'au moins 4/1.

5. Catalyseur électrolytique pour pile à combustible selon la revendication 1, dans lequel l'acide mercaptoalkylique est choisi dans le groupe constitué par l'acide mercaptopropylsulfonique, l'acide mercapropropionique et l'acide mercaptosuccinique.

6. Catalyseur électrolytique pour pile à combustible selon la revendication 1, dans lequel la nanoparticule bimétallique modifiée a une granulométrie située dans la plage allant de 1 à 10 nm.

7. Procédé de préparation d'un catalyseur électrolytique pour pile à combustible sous la forme d'une nanoparticule bimétallique modifiée supportée sur un substrat, le procédé comprenant :
la formation d'une première solution comprenant un premier précurseur métallique, au moins un acide mercaptoalkylique et de l'eau, le premier métal étant du platine ;
la formation d'une deuxième solution comprenant un deuxième précurseur métallique, le deuxième précurseur métallique étant choisi dans le groupe constitué par l'iridium (Ir), le ruthénium (Ru), le cuivre (Cu), le cobalt (Co), le titane (Ti), le zirconium (Zr), le hafnium (Hf), le vanadium (V), le niobium (Nb), le tantale (Ta), le chrome (Cr), le molybdène (Mo), le tungstène (W), le fer (Fe), l'osmium (Os), le nickel (Ni), le palladium (Pd), le rhodium (Rh), l'argent (Ag) et l'or (Au),
la réaction d'une solution résultante obtenue par combinaison de la première solution et de la deuxième solution avec un substrat, ledit substrat étant du carbone, et d'un agent réducteur sous agitation à une température située dans la plage allant de 0 à 80°C pour que soit provoquée une réduction du premier précurseur métallique et du deuxième précurseur métallique et pour que soit obtenue la nanoparticule bimétallique modifiée supportée sur le substrat,
dans lequel l'agent réducteur est ajouté en une quantité telle que le rapport molaire du premier précurseur métallique et du deuxième précurseur métallique à l'agent réducteur soit situé dans la plage allant de 0,20 à 3,0.

8. Procédé de préparation d'un catalyseur électrolytique pour pile à combustible selon la revendication 7, dans lequel l'eau est ajoutée en une quantité telle que le rapport molaire du premier précurseur métallique et du deuxième précurseur métallique à l'eau soit situé dans la plage allant de 2 000 à 20 000.

9. Procédé de préparation d'un catalyseur électrolytique pour pile à combustible selon la revendication 7, dans lequel l'agent réducteur est choisi dans le groupe constitué par NaBH4, HCHO/NaOH et HCHO.
